# EUROPÄISCHE PATENTSCHRIFT

(11) **EP 2 456 042 B1**
(45) Veröffentlichungstag und Bekanntmachung des Hinweises auf die Patenterteilung: **27.06.2018**
(21) Anmeldenummer: 11182296.1
(22) Anmeldetag: 22.09.2011
(51) Int. Cl.: H02J 9/06

(54) **VORRICHTUNG ZUR NOTSTROMVERSORGUNG**
DEVICE FOR EMERGENCY POWER SUPPLY
DISPOSITIF D'ALIMENTATION D'URGENCE

(30) Priorität: 24.09.2010 DE 102010041318
(43) Veröffentlichungstag der Anmeldung: 23.05.2012
(73) Patentinhaber: Zumtobel Lighting GmbH, 6850 Dornbirn (AT)
(72) Erfinder: Schönauer, Michael, 81243 München (DE); Klocker, Bernhard, 6850 Dornbirn (AT); Wittmann, Gerhard, 81249 München (DE)
(74) Vertreter: Thun, Clemens

(56) Entgegenhaltungen:
- WO-A2-01/73914
- DE-A1- 4 419 467
- US-A1- 2007 291 430

## Beschreibung

Die vorliegende Erfindung betrifft eine Vorrichtung zur Notstromversorgung für eine Beleuchtungsanlage, die mehrere Energiespeichereinheiten, deren Energie zur Notstromversorgung vorgesehen ist, aufweist.

Notstromversorgungseinrichtungen kommen bei Beleuchtungsanlagen häufig zum Einsatz um beispielsweise eine sicherheitsrelevante Beleuchtung auch für den Fall eines Stromausfalls zu gewährleisten. Hierbei kann beispielsweise eine zentrale Notstromversorgungseinrichtung für eine komplette Beleuchtungsanlage zum Einsatz kommen, bei der dann vorzugsweise in einem speziellen Raum mehrere Batterieeinheiten bzw. Akkumulatoreinheiten (Zellen oder Blöcke) angeordnet sind. Um nun eine Versorgungsspannung in Höhe von beispielsweise 220 V zur Verfügung zu stellen, ist es notwendig, mehrere Batteriezellen bzw. Batterieblöcke in Reihe zusammenzuschalten. So würden beispielsweise für die Spannung von 220 V 110 Zellen mit einer Spannung von jeweils 2 V benötigt. Häufiger kommen jedoch Batterieblöcke mit 12 V zum Einsatz, wobei dann 18 dieser Blöcke in Reihe geschaltet werden müssen.

In beiden Fällen ist es dementsprechend erforderlich, dass die einzelnen Batterieeinheiten hintereinander angeordnet und seriell miteinander verbunden werden um die entsprechende Versorgungsspannung zu erhalten.

Durch die bisher übliche Verdrahtung der Batterieeinheiten miteinander besteht die Gefahr, dass bei unsachgemäßer Vorgehensweise durch das Montagepersonal es zu hohen Berührungsspannungen kommen kann, die zu lebensgefährlichen Strömen durch den menschlichen Körper führen können. Dieses Problem ergibt sich insbesondere dann, wenn bereits mehrere Batterieeinheiten miteinander verbunden sind und so die Versorgungsspannung bereits eine entsprechende Höhe erreicht hat, die zu gefährlichen Berührungsspannungen für den Menschen führen und durch die Verwendung beispielsweise unisolierten Werkzeugs bei der Verdrahtung zu einer Gefährdung führen. Neben den lebensgefährlichen Strömen durch den menschlichen Körper können des Weiteren dann auch noch Sekundärverletzungen auftreten, da im Kurzschlussfall keine Sicherungen auslösen (Brandgefahr, Lichtbögen). Diese Gefahren ergeben sich nun insbesondere bei dem Hinzufügen einer weiteren Batterieeinheit zu den bereits verdrahteten Batterieeinheiten.

In der US 2007/0291430 A1 ist eine Vorrichtung und ein Verfahren für eine einstellbare Stromversorgung gezeigt, wobei auch eine unterbrechungsfreie Stromversorgung (uninterruptible power supply, UPS) vorgesehen ist.

Aufgabe der vorliegenden Erfindung ist es nun, das Verbinden der Batterieeinheiten miteinander zu vereinfachen und insbesondere die Gefährdung des Montagepersonals zu reduzieren.

Die Aufgabe wird durch eine Vorrichtung zur Notstromversorgung gemäß Anspruch 1 gelöst. Vorteilhafte Weiterbildungen der Erfindung sind Gegenstand der abhängigen Ansprüche.

Erfindungsgemäß wird eine Vorrichtung zur Notstromversorgung insbesondere einer Beleuchtungsanlage vorgeschlagen, die mehrere Energiespeichereinheiten, deren Energie zur Notstromversorgung vorgesehen ist, aufweist, wobei die Energiespeichereinheiten mit Steckverbindern an einer Steckerleiste angeschlossen sind und die Energie zur Notstromversorgung an der Steckerleiste abgreifbar ist und wobei die Steckerleiste intern so verdrahtet bzw. verschaltet ist, dass die Energiespeichereinheiten durch die Steckerleiste in Serie geschaltet sind.

Vorzugsweise kann vorgesehen sein, dass die Steckverbinder isoliert sind und aus vollisolierten und verpolungssicheren Steckern und isolierten Kabeln bestehen und lösbar an den Energiespeichereinheiten und/oder der Steckerleiste angebracht sind.

Eine weitere vorteilhafte Ausgestaltung der Erfindung besteht darin, dass die Energiespeichereinheiten als Batterie/Akkumulatorzellen und/oder Batterie/Akkumulatorblöcke ausgebildet sind und dass an der Steckerleiste die zur Notstromversorgung notwendige Spannung abgegriffen werden kann.

Durch den Anschluss der Batterieeinheiten an die Steckerleiste mit Hilfe von isolierten Steckverbindern besteht beim Verbinden der Batterieeinheiten miteinander nun für das Montagepersonal keine Gefahr mehr in Berührung mit der eventuell sehr hohen Versorgungsspannung zu kommen, da an die einzelnen Batterieeinheiten jeweils ein isolierter Steckverbinder angeschlossen wird. Die berührbare Spannung bleibt hierbei im Schutzkleinspannungsbereich, da das Montagepersonal maximal mit der Spannung einer Batterieeinheit in Kontakt kommen kann.

Des Weiteren ist es auch möglich, dass die Steckverbinder bereits vom Batteriehersteller an einer Batterieeinheit angebracht sind, wobei dann die Steckverbinder vor Ort vom Montagepersonal nur noch in die Steckerleiste gesteckt werden müssen, wodurch ebenfalls die Gefahr einer hohen Berührungsspannung vermieden wird.

Eine weitere vorteilhafte Ausgestaltung der Erfindung besteht darin, dass die Vorrichtung zur Notstromversorgung einen oder mehrere Temperatursensoren zur Überwachung der Temperatur der Energiespeichereinheiten aufweist, welche an der Steckerleiste angeschlossen sind und dass an der Steckerleiste ein Modul zur Überwachung der Funktionsfähigkeit der Energiespeichereinheiten angeschlossen ist, wobei die Steckerleiste intern derart verdrahtet bzw. verschaltet ist, dass das Modul mit jeder Energiespeichereinheit einzeln in Verbindung steht. Hierbei kann dann auch vorgesehen sein, dass die Steckerleiste einen Steuerbus zur Übermittlung der Daten der Temperatursensoren und des Moduls zur Überwachung der Funktionsfähigkeit an eine an den Steuerbus angeschlossene Überwachungseinrichtung aufweist, wobei die Temperatursensoren und das Modul zur Überwachung an den Steuerbus angeschlossen sein können.

Durch das Modul zur Überwachung der Funktionsfähigkeit und die interne Verdrahtung in der Steckerleiste, die es ermöglicht, dass das Modul mit jeder Energiespeichereinheit einzeln in Verbindung steht, ist es nun nicht mehr erforderlich, dass von jeder Batterieeinheit einzelne Leitungen zu einer entfernt gelegenen Überwachungseinrichtung geführt werden müssen, da nunmehr dieses Modul in der Lage ist, diese Informationen zu bündeln und über einen Steuerbus an eine Überwachungseinrichtung zu übermitteln.

Des Weiteren ist es auch möglich, dass die Temperatursensoren an das Modul zur Überwachung angeschlossen sind, wobei dann die Temperaturdaten über das Modul zur Überwachung an die Überwachungseinrichtung übermittelt werden.

Eine weitere vorteilhafte Ausgestaltung der Erfindung besteht darin, dass die Steckerleiste aus mehreren Teilstücken besteht, die über Steckverbinder miteinander verbunden sind, wobei die Steckverbinder vorzugsweise isoliert sind und aus vollisolierten und verpolungssicheren Steckern und isolierten Kabeln bestehen.

Nachfolgend soll die Erfindung anhand von Ausführungsbeispielen und der beiliegenden Zeichnung näher erläutert werden. Es zeigt:

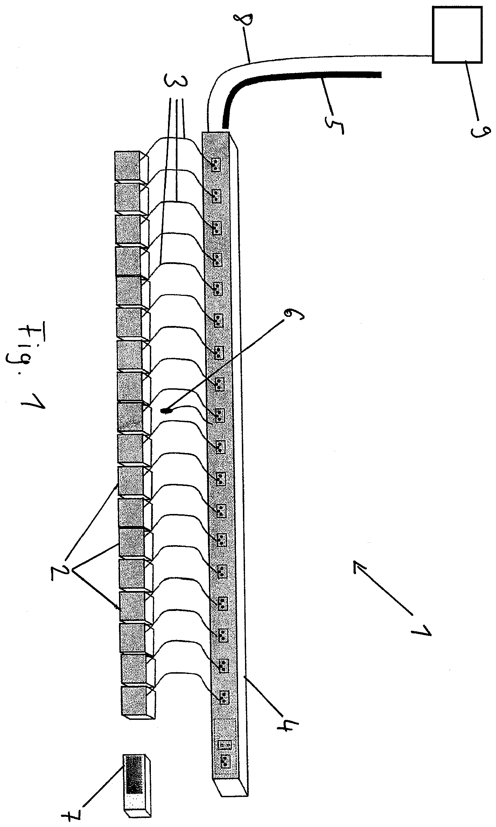

- Figur 1: schematische Darstellung einer erfindungsgemäßen Vorrichtung zur Notstromversorgung.

In Figur 1 ist eine erfindungsgemäße Vorrichtung 1 zur Notstromversorgung schematisch dargestellt, die beispielsweise bei Beleuchtungsanlagen zum Einsatz kommen kann. Die Vorrichtung 1 weist mehrere Energiespeichereinheiten bzw. Batterieeinheiten 2 auf, wobei sich deren Anzahl durch die gewünschte Versorgungsspannung der Vorrichtung 1 zur Notstromversorgung und der Spannung der einzelnen Batterieeinheiten 2 ergibt. So sind bspw. bei einer gewünschten Versorgungsspannung von 220 V, wie bereits erläutert, 18 Batterieblöcke mit jeweils 12 V erforderlich.

Die einzelnen Batterieeinheiten 2 werden jeweils über isolierte Steckverbinder 3 an einer Steckerleiste 4 angeschlossen, wobei die Steckverbinder 3 lösbar an den Batterieeinheiten 2 und/oder der Steckerleiste 4 angebracht werden können.

Durch die Lösbarkeit und Isolation der Steckverbinder 3 ergeben sich nun mehrere Möglichkeiten eine derartige erfindungsgemäße Vorrichtung 1 zur Notstromversorgung sicher und ohne Gefahr einer hohen Berührungsspannung zu montieren. Zum einen besteht die Möglichkeit, dass die Steckverbinder 3 bereits an der Steckerleiste 4 angebracht sind und dann beispielsweise bei der Montage in einem speziellen Raum jeweils an die einzelnen Batterieeinheiten 2 angeschlossen werden, wobei das Montagepersonal aufgrund der isolierten Steckverbinder 3 lediglich mit der Spannung der gerade anzuschließenden Batterieeinheit 2 in Berührung kommen kann und nicht mit einer deutlich höheren Spannung, die sich durch die bereits zuvor angeschlossenen Batterieeinheiten 2 ergibt. Eine weitere Möglichkeit besteht darin, dass von Seiten der Batteriehersteller bereits Steckverbinder 3 an den Batterieeinheiten 2 angebracht werden und dann beim Aufbau der Vorrichtung 1 zur Notstromversorgung das Montagepersonal lediglich die Steckverbinder 3 an die Steckerleiste 4 anstecken muss, wobei auch hier wiederum aufgrund der isolierten Steckverbinder 3 keine Gefahr einer zu hohen Berührungsspannung besteht. Eine weitere Alternative wäre auch noch, dass die Steckverbinder 3 erst bei der Montage der erfindungsgemäßen Vorrichtung 1 zur Notstromversorgung sowohl an die Steckerleiste 4 als auch an die Batterieeinheiten 2 angesteckt werden.

Die Steckerleiste 4 ist in der erfindungsgemäßen Vorrichtung 1 zur Notstromversorgung intern derart verdrahtet bzw. verschaltet, dass die Batterieeinheiten 2 nachdem sie über die Steckverbinder 3 an die Steckerleiste 4 angeschlossen sind in Reihe bzw. Serie zusammengeschaltet sind, wodurch sich die Einzelspannungen der Batterieeinheiten 2 zu einer Gesamtspannung aufaddieren, wodurch sich die entsprechende Versorgungsspannung zur Notstromversorgung ergibt. Diese Versorgungsspannung kann dann an der Steckerleiste 4 an dem Anschluss 5 abgegriffen werden und versorgt dann im Falle eines Stromausfalls beispielsweise eine Beleuchtungsanlage mit Strom.

Die Steckverbinder 3 werden bspw. aus vollisolierten und verpolungssicheren Steckern und isolierten Kabeln zusammengesetzt, wobei an beiden Enden des Kabels entsprechende isolierte Stecker angebracht sind, die an die Batterieeinheiten 2 bzw. die Steckerleiste 4 angesteckt werden können.

Durch die verpolungssicheren Stecker ergibt sich auch eine zusätzliche Sicherheit, da hierdurch keine Gefahr mehr besteht, dass die Stecker bzw. Steckverbinder 3 falsch angesteckt werden können.

Bei den Batterieeinheiten 2 kann es sich beispielsweise um Batteriezellen mit 2 V Spannung oder um Batterieblöcke mit 12 V Spannung handeln, wobei dann für die gewünschte Versorgungsspannung der Vorrichtung 1 zur Notstromversorgung eine entsprechende Anzahl von einzelnen Batterieblöcken bzw. Zellen hintereinander angeordnet werden und durch die Steckerleiste 4 seriell miteinander verbunden sind.

Die erfindungsgemäße Vorrichtung 1 zur Notstromversorgung in Figur 1 weist des Weiteren noch einen Temperatursensor 6 auf, der die Temperatur der Batterieeinheiten 2 erfasst und über einen Steuerbus an eine Überwachungseinrichtung 9 übermittelt. Der Steuerbus wird hierbei von der Steckerleiste 4 zur Verfügung gestellt, wobei über einen Anschluss 8 die Überwachungseinrichtung 9 ebenfalls an den Steuerbus der Steckerleiste 4 angeschlossen ist.

An den Steuerbus der Steckerleiste 4 kann außerdem noch ein Modul 7 zur Überwachung der Funktionsfähigkeit der Batterieeinheiten 2 angeschlossen sein, dass entsprechende Daten ebenfalls an die Überwachungseinrichtung 9 übermittelt. Hierbei ist vorgesehen, dass das Modul 7 mit jeder einzelnen Batterieeinheit 2 in Verbindung steht, wobei hierfür die Steckerleiste 4 wiederum intern derart verdrahtet bzw. verschaltet ist, dass jede Batterieeinheit 2 mit dem Modul 7 einzeln in Verbindung steht bzw. einzeln an dieses Modul 7 angeschlossen ist.

Somit werden Daten über die Funktionsfähigkeit der einzelnen Batterieeinheiten 7 über das Modul 7 an die Überwachungseinrichtung 9 übermittelt, wobei hierbei der Vorteil besteht, dass nicht jede Batterieeinheit 2 eine direkte Verbindung zu der Überwachungseinrichtung 9 benötigt, was zu einer erheblichen Reduzierung der Verdrahtung zwischen der Überwachungseinrichtung 9 und den einzelnen Batterieeinheiten 2 führt.

Zusätzlich kann auch noch vorgesehen sein, dass der Temperatursensor 6 anstatt an den Steuerbus an das Modul 7 angeschlossen ist und Temperaturdaten über dieses Modul 7 an die Überwachungseinrichtung 9 gesendet werden.

Im Gegensatz zu der in Figur 1 gezeigten Steckerleiste 4 kann eine Steckerleiste in der erfindungsgemäßen Vorrichtung zur Notstromversorgung auch aus mehreren Teilstücken bestehen, wobei diese Teilstücke dann ebenso über isolierte Steckverbinder verbunden werden, wobei die Steckverbinder dann wiederum aus vollisolierten und verpolungssicheren Steckern und isolierten Kabeln bestehen. Hierbei wären sowohl eine Reihenschaltung als auch eine Stern- oder Baumstruktur möglich.

Die erfindungsgemäße Vorrichtung ist zwar zur Notstromversorgung vorgesehen, könnte aber auch allgemein als eine Zentralbatterieanlage für einen Testbetrieb verwendet werden.

## Patentansprüche

1. Vorrichtung (1) zur Notstromversorgung insbesondere einer Beleuchtungsanlage, aufweisend mehrere Energiespeichereinheiten (2), wobei die Energiespeichereinheiten (2) mit Steckverbindern (3) an einer Steckerleiste (4) angeschlossen sind, wobei die in den.,Energiespeichereinheiten (2) gespeicherte Energie zur Notstromversorgung an der Steckerleiste (4) abgreifbar ist,
**dadurch gekennzeichnet,**
**dass** die Steckerleiste (4) intern derart verdrahtet bzw. verschaltet ist, dass die Energiespeichereinheiten (2) durch die Steckerleiste (4) in Serie geschaltet sind.

2. Vorrichtung zur Notstromversorgung nach Anspruch 1,
**dadurch gekennzeichnet,**
**dass** die Steckverbinder (3) isoliert sind und vorzugsweise aus vollisolierten und verpolungssicheren Steckern und isolierten Kabeln bestehen.

3. Vorrichtung zur Notstromversorgung nach einem der vorherigen Ansprüche,
**dadurch gekennzeichnet,**
**dass** die Steckverbinder (3) lösbar an den Energiespeichereinheiten (2) und/oder der Steckerleiste (4) angebracht sind.

4. Vorrichtung zur Notstromversorgung nach einem der vorherigen Ansprüche,
**dadurch gekennzeichnet,**
**dass** die Energiespeichereinheiten (2) als Batterie-/Akkumulatorzellen und/oder Batterie-/Akkumulatorblöcke ausgebildet sind und dass an der Steckerleiste (4) die zur Notstromversorgung notwendige Spannung abgegriffen werden kann.

5. Vorrichtung zur Notstromversorgung nach einem der vorherigen Ansprüche,
**dadurch gekennzeichnet,**
**dass** die Steckerleiste (4) einen Steuerbus zur Übermittlung von Daten an eine an den Steuerbus angeschlossene Überwachungseinrichtung (9) aufweist.

6. Vorrichtung zur Notstromversorgung nach einem der vorherigen Ansprüche,
**dadurch gekennzeichnet,**
**dass** die Vorrichtung (1) einen oder mehrere Temperatursensor/en (6) zur Überwachung der Temperatur der Energiespeichereinheiten (2) aufweist, welche an der Steckerleiste (4) angeschlossen sind.

7. Vorrichtung zur Notstromversorgung nach einem der vorherigen Ansprüche,
**dadurch gekennzeichnet,**
**dass** an der Steckerleiste (4) ein Modul (7) zur Überwachung der Funktionsfähigkeit der Energiespeichereinheiten (2) angeschlossen ist, wobei die Steckerleiste (4) intern derart verdrahtet bzw. verschaltet ist, dass das Modul (7) mit jeder Energiespeichereinheit (2) einzeln in Verbindung steht.

8. Vorrichtung zur Notstromversorgung nach Anspruch 5 und 6,
**dadurch gekennzeichnet,**
**dass** der/die Temperatursensor/en (6) an den Steuerbus angeschlossen ist/sind.

9. Vorrichtung zur Notstromversorgung nach Anspruch 6 und 7,
**dadurch gekennzeichnet,**
**dass** der/die Temperatursensor/en (6) an das Modul (7) zur Überwachung angeschlossen ist/sind.

10. Vorrichtung zur Notstromversorgung nach Anspruch 7 und 8 oder 5, 7 und 9,
**dadurch gekennzeichnet,**
**dass** das Modul (7) zur Überwachung der Funktionsfähigkeit an den Steuerbus angeschlossen ist.

11. Vorrichtung zur Notstromversorgung nach einem der vorherigen Ansprüche,
**dadurch gekennzeichnet,**
**dass** die Steckerleiste (4) aus mehreren Teilstücken besteht, die über Steckverbinder miteinander verbunden sind, wobei die Steckverbinder vorzugsweise isoliert sind und aus vollisolierten und verpolungssicheren Steckern und isolierten Kabeln bestehen.

## Claims

1. A device (1) for the emergency power supply in particular of a lighting system, having a plurality of energy storage units (2), wherein the energy storage units (2) are connected with plug connectors (3) to a connector strip (4), wherein the energy stored in the energy storage units (2) can be tapped for the emergency power supply at the connector strip (4),
**characterized in**
**that** the connector strip (4) is internally wired or connected in such a manner that the energy storage units (2) are connected in series by means of the connector strip (4).

2. A device for the emergency power supply according to Claim 1,
**characterized in**
**that** the plug connectors (3) are insulated and preferably consist of fully insulated and reverse polarity protected connectors and insulated cables.

3. A device for the emergency power supply according to any one of the preceding claims,
**characterized in**
**that** the plug connectors (3) are attached detachably to the energy storage units (2) and/or to the connector strip (4).

4. A device for the emergency power supply according to any one of the preceding claims,
**characterized in**
**that** the energy storage units (2) are designed as battery- / accumulator cells and/or battery- / accumulator blocks and that the voltage necessary for the emergency power supply can be tapped at the connector strip (4).

5. A device for the emergency power supply according to any one of the preceding claims,
**characterized in**
**that** the connector strip (4) has a control bus for the transmission of data to a monitoring device (9) connected to the control bus.

6. A device for the emergency power supply according to any one of the preceding claims,
**characterized in**
**that** the device (1) has one or a plurality of temperature sensor/s (6) for monitoring the temperature of the energy storage units (2), which are connected to the connector strip (4).

7. A device for the emergency power supply according to any one of the preceding claims,
**characterized in**
**that** a module (7) for monitoring the functionality of the energy storage units (2) is connected to the connector strip (4), wherein the connector strip (4) is internally wired or connected in such a manner that the module (7) is individually connected with each energy storage unit (2).

8. A device for the emergency power supply according to Claim 5 and 6,
**characterized in**
**that** the temperature sensor/s (6) is/are connected to the control bus.

9. A device for the emergency power supply according to Claim 6 and 7,
**characterized in**
**that** the temperature sensor/s (6) is/are connected to the module (7) for monitoring.

10. A device for the emergency power supply according to Claim 7 and 8 or 5, 7 and 9,
**characterized in**
**that** the module (7) is connected to the control bus for monitoring the functionality.

11. A device for the emergency power supply according to any one of the preceding claims,
**characterized in**
**that** the connector strip (4) consists of a plurality of sections, which are connected with one another via plug connectors, wherein the plug connectors are preferably insulated and consist of fully insulated and reverse polarity protected connectors and insulated cables.

## Revendications

1. Dispositif (1) destiné à l'alimentation électrique de secours, en particulier d'une installation d'éclairage, présentant plusieurs unités de stockage d'énergie (2), les unités de stockage d'énergie (2) étant connectées à des connecteurs (3) sur une barrette de connexion (4), l'énergie stockée dans les unités de stockage d'énergie (2) pouvant être prélevée pour l'alimentation électrique de secours sur la barrette de connexion (4),
**caractérisé en ce que**
la barrette de connexion (4) est câblée ou respectivement interconnectée de façon interne de telle sorte que les unités de stockage d'énergie (2) sont montées en série par la barrette de connexion (4).

2. Dispositif destiné à l'alimentation électrique de secours selon la revendication 1,
**caractérisé en ce que**
les connecteurs (3) sont isolés et sont de préférence composés de fiches entièrement isolées et protégées contre l'inversion de polarité et de câbles isolés.

3. Dispositif destiné à l'alimentation électrique de secours selon l'une des revendications précédentes,
**caractérisé en ce que**
les connecteurs (3) sont mis en place de façon détachable sur les unités de stockage d'énergie (2)et/ou sur la barrette de connexion (4).

4. Dispositif destiné à l'alimentation électrique de secours selon l'une des revendications précédentes,
**caractérisé en ce que**
les unités de stockage d'énergie (2) sont constituées en tant que cellules de batterie/d'accumulateur et/ou en tant que blocs de batterie/d'accumulateur, et **en ce que** la tension nécessaire à l'alimentation électrique de secours peut être prélevée sur la barrette de connexion (4).

5. Dispositif destiné à l'alimentation électrique de secours selon l'une des revendications précédentes,
**caractérisé en ce que**
la barrette de connexion (4) présente un bus de commande destiné à la transmission de données vers un système de surveillance (9) connecté au bus de commande.

6. Dispositif destiné à l'alimentation électrique de secours selon l'une des revendications précédentes,
**caractérisé en ce que**
le dispositif (1) présente un ou plusieurs capteur(s) de température (6) destiné(s) à la surveillance de la température des unités de stockage d'énergie (2) qui sont connectées sur la barrette de connexion (4).

7. Dispositif destiné à l'alimentation électrique de secours selon l'une des revendications précédentes,
**caractérisé en ce**
**qu'**un module (7) destiné à la surveillance du caractère fonctionnel des unités de stockage d'énergie (2) est connecté sur la barrette de connexion (4), la barrette de connexion (4) étant câblée ou respectivement interconnectée de façon interne de telle sorte que le module (7) est individuellement en liaison avec chaque unité de stockage d'énergie (2).

8. Dispositif destiné à l'alimentation électrique de secours selon les revendications 5 et 6,
**caractérisé en ce que**
le/les capteur(s) de température (6) est/sont connecté(s) au bus de commande.

9. Dispositif destiné à l'alimentation électrique de secours selon les revendications 6 et 7,
**caractérisé en ce que**
le/les capteur(s) de température (6) est/sont connecté(s) au module (7) destiné à la surveillance.

10. Dispositif destiné à l'alimentation électrique de secours selon les revendications 7 et 8 ou 5, 7 et 9,
**caractérisé en ce que**
le module (7) destiné à la surveillance du caractère fonctionnel est connecté au bus de commande.

11. Dispositif destiné à l'alimentation électrique de secours selon l'une des revendications précédentes,
**caractérisé en ce que**
la barrette de connexion (4) se compose de plusieurs parties qui sont raccordées les unes aux autres par le biais de connecteurs, les connecteurs étant de préférence isolés et se composant de fiches entièrement isolées et protégées contre l'inversion de polarité et de câbles isolés.
